# EUROPEAN PATENT SPECIFICATION

(11) **EP 2 234 526 B1**
(45) Date of publication and mention of the grant of the patent: **16.04.2014**
(21) Application number: 09704628.8
(22) Date of filing: 22.01.2009
(51) Int. Cl.: B26D 3/22, A47J 43/07

(54) **CUTTING DISC**
SCHNEIDSCHEIBE
DISQUE DE COUPE

(30) Priority: 24.01.2008 SE 0800172
(43) Date of publication of application: 06.10.2010
(73) Proprietor: AB HÄLLDE MASKINER, 164 22 Kista (SE)
(72) Inventor: EKSTRÖM, Ulf, 187 51 Täby (SE)
(74) Representative: Örtenblad, Bertil Tore
(86) International application number: PCT/SE2009/050066
(87) International publication number: WO 2009/093973

(56) References cited:
- EP-A1- 0 943 278
- DE-A1- 10 057 835
- FR-A1- 2 891 129
- GB-A- 2 048 655
- US-A- 4 199 112
- US-A- 4 367 667
- US-A- 4 393 737

## Description

The present invention relates to a cutting disc for a cutting machine.

A cutting machine is a type of food processor, in which a cutting disc is arranged to rotate, and which is used for cutting foodstuffs either in catering kitchens or at home.

Cutting discs being used in such cutting machines have conventionally been manufactured from die-cast aluminium. However, aluminium discs tend to be discoloured, on the one hand when in contact with acids in the foodstuffs and on the other hand during washing-up in a dishwasher. Therefore, it is necessarey to hand wash such discs immediately after use in order to avoid such staining. This is not desirable, for example during use in large catering kitchens.

In order to solve this problem, it has been proposed to coat the aluminium surface with a corrosion-inhibiting alloy. However, even with such surface coatings, certain corrosion takes place if the discs are not washed immediately after use.

During use in cutting machines, cutting discs are subjected to great forces, among other things forces of reaction from foodstuffs that are pressed strongly through the cutting part of the cutting machine in which the disc is arranged. In order to achieve sufficient stiffness, strong material is required in the construction of such a disc. Aluminium discs can be manufactured using a sufficiently strong material thickness and at the same with limited weight. Heavy weight of the disc brings with it needs for more powerful motors, brake systems, etc. of the cutting machine.

Document GB-A-2048655 discloses a cutting disc manufactured from sheet metal.

In general, a cutting disc is a disposable article, which means that it is regularly worn out and need replacing. Replacement discs must have essentially the same angular momentum as the disc being replaced, since existing brake systems in the cutting machines are often dimensioned to suit the disc being replaced, and do not necessarily live up to the requirements posed regarding security, deceleration time, etc. any longer if the weight of the disc increases.

The present invention solves the above described problems.

Thus, the invention relates to a cutting disc for use in a cutting machine, as defined in claim 1.

In the following, the invention will be described in detail, with reference to exemplifying embodiments of the invention and to the appended drawings, where:
- Figure 1 is a perspective view of a cutting disc according to the present invention.
- Figure 2 is a top view of a cutting disc according to the present invention.
- Figure 3 is a side view of a cutting disc according to the present invention.

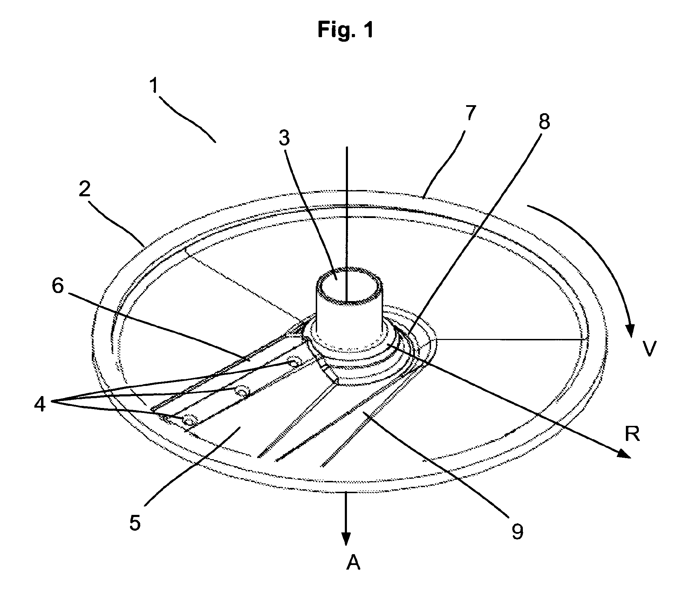

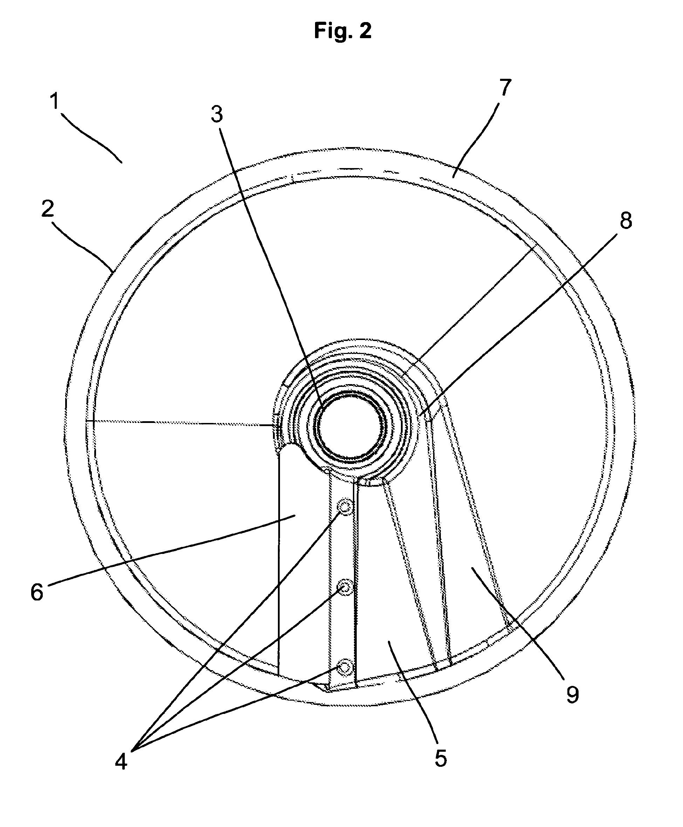

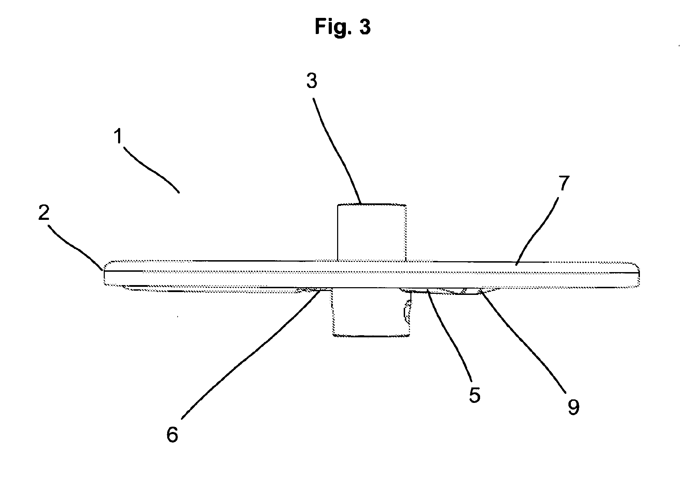

Figure 1 shows a cutting disc 1 according to the invention, intended for use in a cutting machine. The disc 1 is essentially flat, and is associated with an axial direction A, an angular direction V and a radial direction R. The figures 2 and 3 show the same cutting disc from two other angles. Reference numerals are shared between all figures.

The disc 1 comprises a peripherical edge 2, extending in the angular direction V around the axis of the edge 1, and a centrally arranged through hole 3. The dimensions and the form of the hole 3 are adapted for engaging with the existing fastening means for a cutting disc of a per se known cutting machine (not shown), in which the cutting disc 1 is intended for use.

Furthermore, the disc 1 comprises an elongate, ditch-formed section 5, 9, extending in the radial direction R out from the hole 3, and which may for example have parallel edges or be essentially radially symmetric. The ditch-formed section comprises an inclined part 5. Next to the inclined part 5, an opening 6 is arranged, extending essentially in the radial direction R and through which foodstuffs are led during use of the cutting machine.

Along a free edge of the opening 6 there is arranged a cutting edge. The cutting edge may be constituted by the edge of the inclined part 5, which in this case is sharp. However, in the figures a preferred embodiment is shown, in which the cutting edge is arranged along a removable cutting means (not shown), in the form of a blade arranged to be mounted on the cutting dic 1 using conventional fastening means 4, for examle in the form of holes with internal threads, arranged for engagement with externally threaded screws, in turn arranged for retaining the cutting means on the inclined part 5, along a free edge of the inclined part 5. Such a cutting blade is preferably manufactured from a per se conventional metal alloy with high wear and corrosion resistance.

The inclined part 5 comprises at least one surface section, sloping along the angular direction V of the disc 1 so that a point on the inclined surface section which is further away from the cutting edge in the angular direction V is also further away from the principal plane of the disc 1 in the axial direction A.

During use in a cutting machine, the disc 1 rotates in the angular direction V, preferably with a velocity of between 100 and 3000 revolutions per minute. Foodstuffs that are to be cut into pieces, such as vegetables, meat, etc., are fed in the axial direction A towards the disc 1. The foodstuffs are pressed, because of the rotation of the disc 1, towards the cutting edge and are cut by this. The cut-off foodstuff parts are further pressed, because of the rotation of the disc 1 in combination with the sloping plane of the inclined part 5, away from the disc 1 in the axial direction A and on towards the collecting- or feeding out device of the cutting machine or towards a subsequent processing step.

Thus, the foodstuffs may pass through the opening 6 in connection to being cut apart by the cutting edge. The opening 6 may be arranged having various heights and widths, depending on the purpose with the cutting disc 1. For example, various additional cutting devices may be arranged after the cutting disc 1 in the processing program of the cutting machine, why various thicknesses of the cut apart foodstuff parts may be desirable. Such considerations are thus reflected in the choice of form and dimensions for the opening 6.

The rotation of the disc 1 in combination with the angle of the inclined part 5 in relation to the principal extension plane of the disc 1 result in, as has been described above, that cut-apart foodstuffs are pressed away from the disc 1. At the same time, the pressed-away foodstuffs apply a force of reaction on the disc 1. This force of reaction may be considerable, especially when the inclined part is used to press a cut-off slice through a grating arranged beneath the cutting disc used to disintegrate the vegetable further, such as during production of diced potatoes. Therefore, the disc 1 must have high torsional rigidity in order not to be deformed during use, especially since the opening 6 and the through hole 3 deteriorate the torsional rigidity of the disc 1 as compared with that for a homogenous, disc-shaped metal plate.

Instead of cast light-weight metal, the cutting disc 1 according to the present invention is manufactured from relatively thin sheet metal. Preferably, the sheet metal is stainless sheet steel. The thickness of the sheet metal is, among other things depending on the properties of the cutting machine and the desired properties of the cutting disc 1, preferably between 1 and 2.5 millimeters, most preferably about 1.5 mm.

In order to achieve the necessary torsional rigidity, the disc 1 is arranged with a first bent edge 7, arranged periphherically around the disc, and a second bent edge 8, arranged around the through hole 3. The bent edge 7 has an essentially U-formed cross-section.

The first bent edge 7 may have any suitable profile, but a waveformed or rectangular profile is preferred. Moreover, it preferably extends around the whole periphery of the cutting disc 1.

Correspondingly, the second bent edge 8 may have any suitable profile, but a waveformed or rectangular profile is preferred. Moreover, it extends around the whole periphery of the through hole 3, possibly with the exception of an area around the region where the inclined part 5 and/or the opening 6 end towards the through hole 3, in other words the angular region occupied by the inclined part 5 and/or the opening 6.

A third bent edge 9 runs essentially along the radial direction R, essentially parallel to the cutting edge and to the inclined part 5 between the first bent edge 7 and the second bent edge 8, right behind the cutting edge or the inclined part 5 in the rotational direction V of the disc 1.

According to a preferred embodiment, the third bent edge 9 is arranged extending essentially in the radial direction R, sloping in the opposite direction as compared to the inclined part 5 and thereby constituting a bridge between the edge of the inclined part 5 facing away from the cutting edge, which is arranged at a certain distance from the principal plane of extension of the cutting disc 1, and this plane.

According to a preferred embodiment, the third bent edge 9 extends all the way between the first 7 and the second 8 bent edges. This yields better torsional stability to the disc 1. According to an especially preferred embodiment, and as best illustrated in the figures 1 and 2, the second bent edge 8 is arranged to be transformed into the third bent edge 9 by going from running along a curved path along the angular direction V to a straight path essentially along the radial direction R.

According to a very preferred embodiment, the cutting disc 1 is a replacement disc, intended to replace a worn-out cutting disc in an existing cutting machine. To this extent, the dimensions of the cutting disc 1 are chosen so that the cutting disc 1 geometrically fits in the location of the worn-out cutting disc in the cutting machine and can be fastened by the aid of the fastening means in the cutting machine. Moreover, the thickness of the sheet metal in the cutting disc 1 is chosen so that the cutting disc 1 has esentially the same angular momentum as the worn-out cutting disc. As a result, the existing motor and brake system in the cutting machine may be used with their originally intended properties, especially in terms of security considerations such as deceleration time for the disc during braking.

In this way, the present invention achieves a cutting disc for a cutting machine with essentially the same mechanical properties as those for conventional cutting discs in cast light-weigh metal, but which offers substantially better esthetical properties during use as a consequence of less corrosion attacks when in contact with foods and during cleaning in a dishwasher, and which is cheaper to manufacture. The bent edges improve the torsional rigidigy of the disc, so that comparatively thin sheet metal may be used. At the same time, they facilitate cleaning, which is necessary from a hygienic and regulatory standpoint.

Above, preferred embodiments have been described. However, it is apparent to the skilled person that many modifications may be made to the described embodiments without departing from the thought of the invention. Thus, the invention shall not be limited to the described embodiments, but is variable within the scope of the enclosed claims.

## Claims

1. Cutting disc (1) for use in a cutting machine, manufactured from sheet metal, comprising a centrally arranged through hole (3), a radially extending opening (6), and a first bent edge (7) extending peripherically around the disc (1), **characterised in that** the cutting disc (1) comprises a second bent edge (8) extending peripherically around the through hole (3), and **in that** the disc (1) comprises a ditch-formed section (5,9) extending radially from the centre of the cutting disc (1) and out to the said first bent edge (7), **in that** the said ditch-formed section (5,9) comprises a part (5) inclined in the angular direction, which is arranged to press cut-off pieces of foodstuff away from the disc (1) as this rotates in the cutting machine, and **in that** the second bent edge (8) is arranged along the whole periphery of the through hole (3), except possibly over the angular region which is occupied by the opening (6) or the inclined part (5).

2. Cutting disc (1) according to claim 1, **characterised in that** the disc (1) is manufactured from stainless sheet steel with a thickness of between 1 and 2.5 millimeters.

3. Cutting disc (1) according to claim 1 or 2, **characterised in that** the first bent edge (7) is arranged along the whole periphery of the cutting disc (1).

4. Cutting disc (1) according to claim 3, **characterised in that** at least one fastening means (4) for fastening of a cutting means comprising a cutting edge is arranged along the inclined part (5).

5. Cutting disc (1) according to any one of the preceding claims, **characterised i n** that a radially arranged, third bent edge (9) is arranged behind the opening (6) in the rotational direction (R) of the cutting disc (1).

6. Cutting disc (1) according to any one of the preceding claims, **characterised in that** the cutting disc (1) is a replacement disc intended to replace a worn-out cutting disc in an existing cutting machine, and **in that** the thickness of the sheet metal is chosen so that the cutting disc (1) has essentially the same angular momentum as the worn-out cutting disc.

7. Cutting disc (1) according to any one of the preceding claims, **characterised in that** the disc (1) when used is arranged to rotate at between 100 and 3000 revolutions per minute.

## Patentansprüche

1. Schneidscheibe (1) zur Verwendung in einer Schneidemaschine, hergestellt aus Metallblech, mit einem zentral angeordneten Durchgangsloch (3), einer sich radial erstreckenden Öffnung (6) und einer ersten abgebogenen Kante (7), welche sich am Umfang um die Scheibe (1) herum erstreckt, **dadurch gekennzeichnet, dass** die Schneidscheibe (1) eine zweite abgebogene Kante (8) aufweist, welche sich um das Durchgangsloch (3) peripher herum erstreckt, und dass die Scheibe (1) einen grabenförmigen Abschnitt (5, 9) aufweist, welcher sich radial von der Mitte der Schneidscheibe (1) und nach außen zu der ersten abgebogenen Kante (7) erstreckt, dass der genannte grabenförmige Abschnitt (5, 9) einen Teil (5) aufweist, welcher in Winkelrichtung abgeschrägt ist, welcher so angeordnet ist, dass er abgeschnittene Lebensmittelstücke von der Scheibe (1) wegdrückt, wenn diese in der Schneidmaschine rotiert und dass die zweite abgebogene Kante (8) entlang des gesamten Umfangs des Durchgangslochs (3) angeordnet ist, außer eventuell über den Winkelbereich, welcher durch die Öffnung (6) oder den abgeschrägten Teil (5) besetzt ist.

2. Schneidscheibe (1) nach Anspruch 1, **dadurch gekennzeichnet, dass** die Scheibe (1) aus Edelstahlblech mit einer Dicke von zwischen 1 bis 2,5 mm hergestellt ist.

3. Schneidscheibe (1) nach Anspruch 1 oder 2, **dadurch gekennzeichnet, dass** die erste abgebogene Kante (7) entlang des gesamten Umfangs der Schneidscheibe (1) angeordnet ist.

4. Schneidscheibe (1) nach Anspruch 3, **dadurch gekennzeichnet, dass** wenigstens eine Befestigungseinrichtung (4) zum Befestigen einer Schneideinrichtung mit einer Schneidkante entlang des abgeschrägten Teils (5) angeordnet ist.

5. Schneidscheibe (1) nach einem der vorhergehenden Ansprüche, **dadurch gekennzeichnet, dass** eine radial angeordnete dritte abgebogene Kante (9) hinter der Öffnung (6) in Drehrichtung (R) der Schneidscheibe (1) angeordnet ist.

6. Schneidscheibe (1) nach einem der vorhergehenden Ansprüche, **dadurch gekennzeichnet, dass** die Schneidscheibe (1) eine Ersatzscheibe ist, welche dafür vorgesehen ist, um eine verschlissene Schneidscheibe in einer vorhandenen Schneidmaschine zu ersetzen und dass die Dicke des Metallblechs so ausgewählt wird, dass die Schneidscheibe (1) im Wesentlichen das gleiche Winkelmoment hat wie die verschlissene Schneidscheibe.

7. Schneidscheibe (1) nach einem der vorhergehenden Ansprüche, **dadurch gekennzeichnet, dass** die Scheibe (1), so angeordnet ist, dass sie sich im Einsatz mit zwischen 100 und 3.000 Umdrehungen pro Minute dreht.

## Revendications

1. Disque de coupe (1) destiné à être utilisé dans une machine de coupe, obtenu à partir d'une feuille métallique et comprenant un perçage central traversant (3), une ouverture (6) s'étendant radialement et un premier bord coudé (7) s'étendant sur la périphérie du disque (1),
**caractérisé en ce que**
le disque de coupe (1) comprend un second bord coudé (8) s'étendant sur la périphérie du perçage traversant (3), et le disque (1) comporte un segment formé en une rigole (5, 9) s'étendant radialement à partir du centre du disque de coupe (1) et en dehors du premier bord coudé (7), le segment formé en une rigole (5, 9) comprenant une partie (5) inclinée en direction angulaire qui est conformée pour comprimer des tronçons d'aliments découpés pour les extraire du disque (1) lorsque celui-ci tourne dans la machine de coupe, et le second bord coudé (8) est situé le long de la totalité de la périphérie du perçage traversant (3) excepté le cas échéant sur la région angulaire qui est occupée par l'ouverture (6) ou la partie inclinée (5).

2. Disque de coupe conforme à la revendication 1,
**caractérisé en ce que**
le disque (1) est fabriqué à partir d'une feuille en acier inoxydable ayant une épaisseur comprise entre 1 et 2,5 mm.

3. Disque de coupe conforme à la revendication 1 ou 2,
**caractérisé en ce que**
le premier bord coudé (7) est situé le long de la totalité de la périphérie du disque de coupe (1).

4. Disque de coupe conforme à la revendication 3,
**caractérisé en ce qu'**
au moins un moyen de fixation (4) permettant de fixer un moyen de coupe comprenant un bord de coupe est monté le long de la partie inclinée (5).

5. Disque de coupe conforme à l'une quelconque des revendications précédentes,
**caractérisé en ce qu'**
un troisième bord coudé (9) situé radialement est positionné à l'arrière de l'ouverture (6) dans la direction de rotation R du disque de coupe (1).

6. Disque de coupe conforme à l'une quelconque des revendications précédentes,
**caractérisé en ce que**
le disque de coupe (1) est un disque de remplacement destiné à remplacer un disque de coupe usé dans une machine de coupe existante, et l'épaisseur de la feuille métallique est choisie de sorte que le disque de coupe (1) ait essentiellement la même énergie cinétique que le disque de coupe usé.

7. Disque de coupe conforme à l'une quelconque des revendications précédentes,
**caractérisé en ce que**
lorsqu'il est utilisé le disque (1) tourne à entre 100 et 3.000 tours par minute.
